# DEMANDE DE BREVET EUROPEEN

(11) **EP 4 768 885 A1**
(43) Date de publication de la demande: **01.07.2026**
(21) Numéro de dépôt: 25226975.8
(22) Date de dépôt: 23.12.2025
(51) Int. Cl.: G01M 3/36, E03B 7/10, F15B 20/00, F16L 55/00, F16L 57/02, G01M 5/00

(54) **DISPOSITIF POUR DÉTECTER LA POSSIBILITÉ D'UNE RUPTURE D'UNE CONDUITE**

(30) Priorité: 30.12.2024 FR 2415411; 30.12.2024 FR 2415412; 30.12.2024 FR 2415413; 30.12.2024 FR 2415414
(71) Demandeur: Infraneo, 93500 Pantin (FR)
(72) Inventeur: SUTTER, Baptiste, 69620 FRONTENAS (FR)
(74) Mandataire: Boüan du Chef du Bos, Louis-Paterne

(57) **Abrégé**

La présente invention concerne les dispositifs pour détecter les possibilités de rupture d'une conduite de fluide 1.

Le dispositif selon l'invention comporte des moyens pour détecter, sur au moins une portion 2 de la conduite 1, une déformation de la paroi de cette portion de conduite.

## Description

### Domaine de l'invention

La présente invention concerne les dispositifs pour détecter la possibilité d'une rupture d'une conduite, plus particulièrement une conduite située dans un milieu hostile ou très difficile d'accès, par exemple un égout ou analogue.

### Art antérieur

Il existe en effet de nombreuses conduites qui véhiculent des fluides de toute nature, notamment des liquides.

Une conduite, au sens de la présente invention, est un tuyau manufacturé globalement rigide, fabriqué avec une forme tubulaire déterminée, installé dans une structure de façon à y permettre la circulation de fluides. Elle se distingue des canaux souples, notamment biologiques tels que les veines, dont la forme est variable en fonction du volume de fluide circulant.

La durée de vie de ces conduites est très difficile à déterminer et l'état de leur paroi est difficile à contrôler de façon visuelle car, d'une part elles sont parfois situées dans des milieux qui les rendent peu accessibles et, d'autre part, quel que soit le milieu dans lequel elles sont situées, il est presque impossible de vérifier quantitativement l'usure de la surface intérieure de leur paroi.

Or, le fait de ne pas pouvoir détecter la possibilité d'une rupture d'une telle conduite peut entraîner des conséquences néfastes pour les utilisateurs du fluide qu'elle transporte, par exemple une suppression de l'alimentation en eau potable, en eau utilisée pour le refroidissement d'unité de production de tout type, etc.

### Exposé de l'invention

La présente invention a pour objectif de pallier ces inconvénients de l'art antérieur.

En particulier la présente invention a-t-elle pour but de réaliser un dispositif pour aider à la détection d'une possibilité de rupture d'une conduite de fluide, qui soit d'une réalisation simple et peu onéreuse.

Plus précisément, la présente invention a pour objet un dispositif pour détecter la possibilité d'une rupture d'une conduite de fluide, caractérisé par le fait qu'il comporte des moyens pour détecter, sur au moins une portion de ladite conduite, une déformation de la paroi de ladite portion de conduite

Ces objectifs, ainsi que d'autres qui apparaîtront plus clairement par la suite, sont atteints à l'aide d'un dispositif pour détecter les possibilités de rupture d'une conduite de fluide. Selon l'invention, le dispositif pour détecter la possibilité d'une rupture d'une conduite de fluide comporte des moyens pour détecter, sur au moins une portion de la conduite, une déformation de la paroi de la portion de conduite.

De préférence, les moyens pour détecter, sur au moins une portion de la conduite, une déformation de la paroi de la portion de conduite, sont constitués par des moyens pour détecter au moins l'une des déformations suivantes : déformation élastique, déformation plastique.

Les moyens pour détecter une déformation de la paroi de la conduite peuvent être mis en œuvre selon plusieurs modes de réalisation distincts. Chacun de ces modes, bien que visant l'objectif commun de détecter une rupture potentielle, constitue une solution technique à part entière, pouvant être mise en œuvre indépendamment des autres.

Selon un premier mode de réalisation, les moyens pour détecter une déformation de la paroi de la portion de conduite sont constitués par des moyens pour détecter les variations de la valeur de la longueur du pourtour extérieur d'une section transversale de la portion de conduite.

De préférence, les moyens pour détecter les variations de la longueur du pourtour extérieur de la section transversale comportent :
- un cerclage ouvert à deux extrémités distantes l'une de l'autre, ce cerclage étant agencé pour être apte à être au contact de la surface extérieure de la paroi de ladite portion de conduite,
- des moyens pour déterminer la valeur de la distance entre les deux extrémités et délivrer un signal correspondant à la valeur de cette distance, et
- des moyens pour créer un signal d'alarme quand le signal délivré subit une variation.

Avantageusement, le dispositif comporte en outre des moyens pour appliquer une force d'appui sensiblement constante entre les deux extrémités.

L'application d'une telle force garantit un contact fiable et permanent entre le cerclage et la surface de la conduite, permettant de compenser les variations dimensionnelles non liées à une rupture, telles que celles dues aux dilatations thermiques, et assurant ainsi que la mesure reflète fidèlement une déformation structurelle.

Avantageusement, les moyens pour appliquer une force d'appui sensiblement constante entre les deux extrémités comportent un vérin monté en coopération avec les extrémités via des moyens d'étrier pour appliquer un effort de valeur déterminée.

Selon un deuxième mode de réalisation, les moyens pour détecter une déformation de la paroi de la portion de conduite comportent des moyens pour détecter les variations de la distance entre deux premiers points sensiblement opposés de la surface extérieure de la paroi.

De préférence, les moyens pour détecter les variations de la distance entre les deux premiers points sensiblement opposés de la surface extérieure de la paroi comportent en outre des moyens pour appliquer une force de pression sensiblement constante entre deux seconds points sensiblement opposés de la surface extérieure de la paroi, les droites définies respectivement par les premiers et seconds points n'étant pas confondues.

Cette pré-contrainte, appliquée sur un axe distinct de l'axe de mesure, stabilise le dispositif et garantit que les moyens de mesure restent fermement en appui contre la paroi, ce qui permet d'obtenir une mesure de déformation diamétrale fiable et répétable.

De façon préférentielle, les droites définies respectivement par les premiers et seconds points n'étant pas confondues sont orthogonales.

Selon un troisième mode de réalisation, les moyens pour détecter une déformation de la paroi de la portion de conduite, la conduite étant définie selon sensiblement un axe longitudinal, comportent des moyens pour détecter des variations de déformation en flexion de la paroi de la portion de conduite entre deux troisièmes points de la conduite, les troisièmes points encadrant axialement la portion de conduite.

De préférence, les moyens pour détecter des variations de déformation en flexion de la paroi de la portion de conduite entre deux troisièmes points de la conduite, ces troisièmes points encadrant axialement la portion de conduite, comportent un capteur de déplacement agencé pour mesurer un déplacement en un point de détection de la portion de conduite par rapport à un axe lié aux des deux troisièmes points, ce capteur de déplacement étant apte à délivrer, en sortie, un signal correspondant à la valeur de ce déplacement du point de détection.

De façon préférentielle, les moyens pour détecter une déformation de la paroi de la portion de conduite comportent en outre des moyens pour appliquer une force de pression sensiblement constante en un point d'application situé sur la surface extérieure de la paroi de la portion de conduite, la force faisant un angle non nul avec l'axe longitudinal.

En appliquant une force contrôlée, le dispositif mesure la flexion qui en résulte pour évaluer directement l'état de la paroi. Ce diagnostic est indépendant de la pression du fluide, ce qui le rend plus fiable que les solutions de l'art antérieur, et permet une détection précoce.

Avantageusement, les moyens pour appliquer une force de pression sensiblement constante en un point d'application situé sur la surface extérieure de la paroi de la portion de conduite, la force faisant un angle non nul avec l'axe longitudinal, comportent un vérin hydraulique apte à exercer une force de pression constante, ce vérin étant positionné dans un étrier dont les deux extrémités sont en appui solidaire sur la portion de paroi aux deux troisièmes points.

De préférence, le dispositif pour détecter les possibilités de rupture d'une conduite de fluide est apte à être mise sur une conduite installée dans une structure de façon à y permettre la circulation de fluides. Ce dispositif peut notamment être portable pour être facilement mis en œuvre sur une conduite existante préinstallée dans une structure, et pouvant être peu accessible.

Par ailleurs, l'objectif du dispositif étant de vérifier l'intégrité des conduites, ce dispositif réalise bien entendu un contrôle non destructif des conduites.

### Description des figures

L'invention sera mieux comprise à la lecture de la description suivante de modes de réalisation préférentiels, donnée à titre de simple exemple figuratif et non limitatif, et accompagnée des figures parmi lesquelles :
- La figure 1 représente une vue en coupe transversale schématique d'un premier mode de réalisation du dispositif selon l'invention pour détecter la possibilité de rupture d'une conduite de fluide,
- La figure 2 représente une vue en coupe transversale schématique d'un deuxième mode de réalisation du dispositif selon l'invention pour détecter la possibilité de rupture d'une conduite de fluide, et
- La figure 3 représente une vue en coupe longitudinale axiale schématique d'un troisième mode de réalisation d'un dispositif selon l'invention pour détecter la possibilité de rupture d'une conduite de fluide.

### Description des modes de réalisation

Il est précisé que lorsque, dans la présente description, une expression définit à elle seule, sans mention particulière spécifique la concernant, un ensemble de caractéristiques structurelles, ces caractéristiques peuvent être prises, pour la définition de l'objet de la protection demandée, quand cela est techniquement possible, soit séparément, soit en combinaison totale et/ou partielle.

Il est de plus précisé que, dans la présente description, si l'adverbe "sensiblement" est associé à un qualificatif d'un moyen donné, ce qualificatif doit être compris au sens strict ou approché.

La présente invention concerne un dispositif pour détecter la possibilité, ou le risque, d'une rupture d'une conduite de fluide 1.

Selon une caractéristique essentielle du dispositif selon l'invention, il comporte des moyens pour détecter, sur au moins une portion 2 de la conduite 1, une déformation de la paroi de cette portion de conduite, aussi bien une déformation élastique qu'une déformation plastique.

Une telle déformation peut être facilement interprétée comme une défaillance, pouvant se produire à plus ou moins court terme, de la paroi de cette portion de conduite et il y a une grande probabilité pour qu'elle soit la conséquence d'un affaiblissement de cette paroi dû à une diminution de son épaisseur, par une détérioration de la quantité de matière constituant cette paroi, par quelque effet que ce soit : vieillissement de la matière, décomposition, abrasion, érosion, etc.

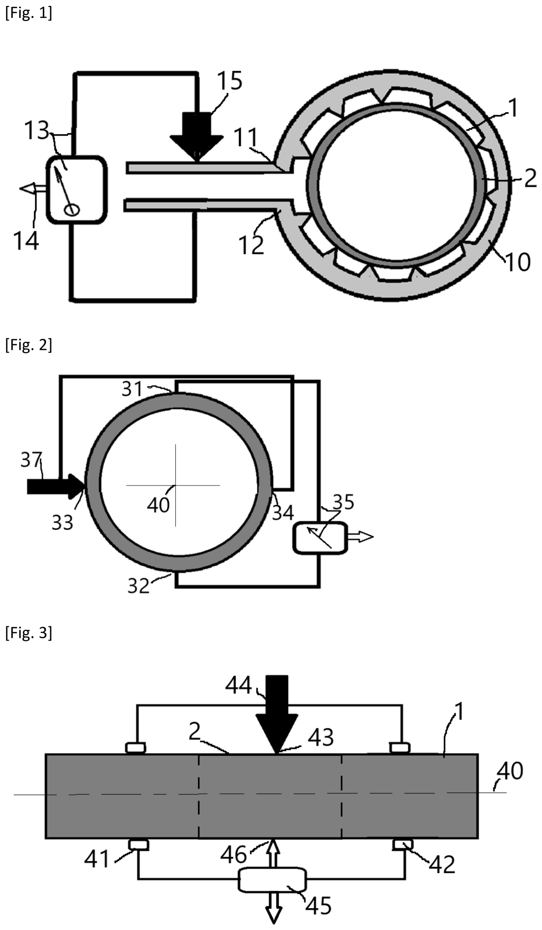

Selon un premier mode de réalisation du dispositif selon l'invention, figure 1, les moyens pour détecter une déformation de la paroi de la portion de conduite 2 sont constitués par des moyens pour détecter les variations de la valeur de la longueur du pourtour extérieur d'une section transversale de cette portion de conduite.

De façon préférentielle, ces moyens pour détecter les variations de la longueur du pourtour extérieur de la section transversale de la portion de conduite 2 comportent un cerclage 10 ouvert à deux extrémités 11, 12 distantes l'une de l'autre, ce cerclage étant agencé pour être apte à être au contact de la surface extérieure de la paroi de la portion de conduite, des moyens 13 pour déterminer la valeur de la distance entre ces deux extrémités 11, 12 et délivrer un signal correspondant à la valeur de cette distance, et des moyens pour créer un signal d'alarme en 14 quand le signal délivré subit une variation.

Les moyens 13 pour déterminer la valeur de la distance entre les deux extrémités 11, 12 sont du domaine de l'homme du métier, par exemple comme ceux du type « pied à coulisse » mécanique ou électronique, ou du type à rayon lumineux laser ou analogue.

De façon encore plus préférentielle, pour assurer la détection d'une variation du signal, le dispositif comporte en outre des moyens 15 pour appliquer une force d'appui sensiblement constante entre les deux extrémités 11, 12 du cerclage 10. De tels moyens sont par exemple un vérin hydraulique ou analogue connu en lui-même, apte à exercer, via sa tige de sortie, une force de pression constante et éventuellement ajustable.

Le dispositif selon la figure 1 fonctionne de façon très simple : si la distance entre les deux extrémités 11, 12 diminue, cette variation s'interprète par le fait que le périmètre de la portion de conduite 2 diminue et qu'une certaine quantité de la matière dont est constituée la paroi de cette portion de conduite a été détruite. Les services de maintenance ainsi alertés peuvent intervenir pour effectuer des opérations nécessaires à la remise en bon état de la portion de conduite.

La figure 2 illustre schématiquement un autre mode de réalisation du dispositif selon l'invention qui peut être utilisé dans certains cas de formes particulières de portions de conduites 2.

Selon le second mode de réalisation schématiquement illustré sur la figure 2, les moyens pour détecter une déformation de la paroi d'une portion de conduite 2 comportent des moyens pour détecter les variations de la distance entre deux premiers points sensiblement opposés 31, 32 de la surface extérieure de cette paroi.

De façon préférentielle, selon ce deuxième mode de réalisation, les moyens pour détecter une déformation de la paroi de la portion de conduite 2 comportent en outre des moyens pour appliquer une force de pression sensiblement constante entre deux seconds points sensiblement opposés 33, 34 de la surface extérieure de la paroi, les droites définies respectivement par les premiers et seconds points n'étant pas confondues, ces droites étant optionnellement avantageusement orthogonales.

Le fonctionnement du dispositif selon ce deuxième mode de réalisation se déduit sans difficulté de celui décrit ci-avant pour la réalisation selon la figure 1.

La figure 3 illustre schématiquement un troisième mode de réalisation du dispositif selon l'invention, qui peut être utilisé dans certains cas de formes de portions de conduites 2.

Dans ce troisième mode de réalisation, les moyens pour détecter une déformation de la paroi de la portion de conduite 2, la conduite étant définie selon sensiblement un axe longitudinal 40, comportent des moyens pour détecter des variations de déformation en flexion de la paroi de la portion de conduite entre deux troisièmes points 41, 42 de la conduite, ces deux troisièmes points encadrant axialement la portion de conduite 2, de façon que ces deux troisièmes points 41, 42 soient situés dans une section longitudinale selon l'axe 40 et respectivement assez éloignés des extrémités de la portion de conduite 2 (représentée en traits interrompus sur cette figure 3).

Dans ce mode de réalisation, selon une caractéristique avantageuse de l'invention, les moyens pour détecter une déformation de la paroi de la portion de conduite 2 comportent en outre des moyens 44 pour appliquer une force de pression sensiblement constante en un point d'application 43 situé sur la surface extérieure de la paroi de la portion de conduite, cette force faisant un angle non nul avec l'axe longitudinal 40. Ces moyens sont du même type que ceux décrits en regard des figures 1 et 2, par exemple un vérin.

Le vérin applique une force constante sur la portion de conduite 2 et, lorsque est détectée une variation de distance entre un capteur 45 et le point 46 situé sur la surface extérieure de la paroi de la portion de conduite, sensiblement à l'opposé du point d'application 43, cette variation s'interprète par le fait que la portion de conduite 2 a fléchi, que sa paroi s'est donc affaiblie et qu'il est nécessaire de décider des interventions de maintenance.

Des dispositifs selon l'invention peuvent être utilisés sur différentes portions de conduite pour la surveillance de la conduite sur toute sa longueur.

Il est en outre bien compris des hommes du métier que, pour la mise en œuvre des dispositifs selon l'invention, ils seront étalonnés sur une conduite neuve, notamment pour déterminer la valeur de la pression qui sera exercée par le vérin.

## Revendications

1. Dispositif pour détecter les possibilités de rupture d'une conduite de fluide (1), **caractérisé par le fait qu'**il comporte des moyens pour détecter, sur au moins une portion (2) de ladite conduite (1), une déformation de la paroi de ladite portion de conduite.

2. Dispositif selon la revendication 1, **caractérisé par le fait que** lesdits moyens pour détecter, sur au moins une portion de ladite conduite, une déformation de la paroi de ladite portion de conduite, sont constitués par des moyens pour détecter au moins l'une des déformations suivantes : déformation élastique, déformation plastique.

3. Dispositif selon la revendication 2, **caractérisé par le fait que** les moyens pour détecter une déformation de la paroi de ladite portion de conduite (2) sont constitués par des moyens pour détecter les variations de la valeur de la longueur du pourtour extérieur d'une section transversale de ladite portion de conduite.

4. Dispositif selon la revendication 3, **caractérisé par le fait que** les moyens pour détecter les variations de la longueur du pourtour extérieur de ladite section transversale comportent :
- un cerclage (10) ouvert à deux extrémités (11, 12) distantes l'une de l'autre, ce cerclage étant agencé pour être apte à être au contact de la surface extérieure de la paroi de ladite portion de conduite (2),
- des moyens (13) pour déterminer la valeur de la distance entre les deux dites extrémités (11, 12) et délivrer un signal correspondant à la valeur de cette distance, et
- des moyens pour créer un signal d'alarme quand ledit signal délivré subit une variation.

5. Dispositif selon la revendication 4, **caractérisé par le fait qu'**il comporte en outre des moyens (15) pour appliquer une force d'appui sensiblement constante entre les deux dites extrémités (11, 12).

6. Dispositif selon la revendication 5, **caractérisé par le fait que** les moyens (15) pour appliquer une force d'appui sensiblement constante entre les deux extrémités (11, 12) comportent un vérin monté en coopération avec lesdites extrémités via des moyens d'étrier pour appliquer un effort de valeur déterminée.

7. Dispositif selon la revendication 2, **caractérisé par le fait que** les moyens pour détecter une déformation de la paroi de ladite portion de conduite (2) comportent des moyens pour détecter les variations de la distance entre deux premiers points sensiblement opposés (31, 32) de la surface extérieure de ladite paroi.

8. Dispositif selon la revendication 7, **caractérisé par le fait que** les moyens pour détecter une déformation de la paroi de ladite portion de conduite (2) comportent en outre des moyens pour appliquer une force de pression sensiblement constante entre deux seconds points sensiblement opposés (33, 34) de la surface extérieure de ladite paroi, les droites définies respectivement par les premiers et seconds points n'étant pas confondues.

9. Dispositif selon la revendication 8, **caractérisé par le fait que** lesdites droites définies respectivement par les premiers et seconds points sont orthogonales.

10. Dispositif selon la revendication 2, **caractérisé par le fait que** les moyens pour détecter une déformation de la paroi de ladite portion de conduite (2), ladite conduite étant définie selon sensiblement un axe longitudinal (40), comportent des moyens pour détecter des variations de déformation en flexion de la paroi de ladite portion de conduite entre deux troisièmes points (41, 42) de ladite conduite, lesdits deux troisièmes points encadrant axialement ladite portion de conduite (2).

11. Dispositif selon la revendication 10, **caractérisé par le fait que** les moyens pour détecter des variations de déformation en flexion de la paroi de ladite portion de conduite (2) entre deux troisièmes points (41, 42) de ladite conduite, cesdits troisièmes points encadrant axialement ladite portion de conduite (2), comportent un capteur de déplacement (45) agencé pour mesurer un déplacement en un point de détection (46) de ladite portion de conduite (2) par rapport à un axe lié aux dits deux troisièmes points (41, 42), ce capteur de déplacement (45) étant apte à délivrer, en sortie, un signal correspondant à la valeur de ce déplacement du point de détection (46).

12. Dispositif selon l'une quelconque des revendications 10 et 11, **caractérisé par le fait que** les moyens pour détecter une déformation de la paroi de ladite portion de conduite (2) comportent en outre des moyens (44) pour appliquer une force de pression sensiblement constante en un point d'application (43) situé sur la surface extérieure de la paroi de ladite portion de conduite (2), ladite force faisant un angle non nul avec l'axe longitudinal (40).

13. Dispositif selon la revendication 12, **caractérisé par le fait que** les moyens (44) pour appliquer une force de pression sensiblement constante en un point d'application (43) situé sur la surface extérieure de la paroi de ladite portion de conduite (2), ladite force faisant un angle non nul avec l'axe longitudinal (40), comportent un vérin hydraulique (44) apte à exercer une force de pression constante, ce dit vérin étant positionné dans un étrier dont les deux extrémités sont en appui solidaire sur la portion de paroi (2) aux deux troisièmes points (41, 42).
